# EUROPEAN PATENT APPLICATION

(11) **EP 4 718 093 A1**
(43) Date of publication of application: **01.04.2026**
(21) Application number: 25197202.2
(22) Date of filing: 21.08.2025
(51) Int. Cl.: G01R 31/367, G01R 31/382, G01R 31/3842, G01R 31/396, G06F 21/57, H01M 10/48

(54) **BATTERY SYSTEM**

(30) Priority: 25.09.2024 JP 2024165779
(71) Applicant: Prime Planet Energy & Solutions, Inc., Chuo-ku, Tokyo 103-0022 (JP)
(72) Inventor: KUSHIDA, Kohei, Tokyo, 103-0022 (JP); KAWAMOTO, Tomonori, Tokyo, 103-0022 (JP); TERAUCHI, Tomoya, Tokyo, 103-0022 (JP); ISSHIKI, Yasumasa, Tokyo, 103-0022 (JP)
(74) Representative: Kuhnen & Wacker Patent- und Rechtsanwaltsbüro PartG mbB

(57) **Abstract**

A memory storage unit of a battery system separately stores separately storing a start-up program related to starting up of a measuring means, a measurement program related to a measurement, and a state calculation program related to calculating of a battery state of a battery cell. A controller executes a first secure boot for a first program including the start-up program and thereafter executes a process contained in the first program. While the controller is executing the process contained in the first program, the controller executes a second secure boot for a second program including the measurement program or the state calculation program. The controller executes a process contained in the second program after the process of the first program is executed and the second secure boot is executed.

## Description

### BACKGROUND

The present invention relates to battery systems.

JP 2023-87987 A, for example, discloses an electronic control device that performs a secure boot. This electronic control device divides a target region for a secure boot so as to include at least a first divided area and a second divided area.

A portion of a verification process for the first divided area is executed by a hardware security module, and the entirety of a verification process for the second divided area is executed by an arithmetic unit that is capable of executing arithmetic processing. At this time, the portion of the verification process for the first divided area and the entirety of the verification process for the second divided area are executed in parallel.

JP 2023-117789 A, for example, discloses a secure boot device that performs secure boot. This secure boot device includes a determination unit and a control unit. The determination unit executes a secure boot for verification target programs and determines the integrity of the verification target programs. The control unit executes a verification target program that has been determined to retain integrity by the determination unit. In parallel with executing of the verification target program by the control unit, the determination unit determines the integrity of those of the plurality of verification target programs that have not determined to retain integrity.

### SUMMARY

The present inventors contemplate executing a secure boot for a battery program that is necessary for calculating the battery status, such as the SOC, of battery cells connected to a load. When a secure boot is executed for the just-mentioned battery program using the electronic control device disclosed in JP 2023-87987 A or the secure boot device disclosed in JP 2023-117789 A, the execution time of the secure boot may be undesirably long.

According to the present disclosure, a battery system includes at least one battery cell, a measuring means, and a controller. The measuring means includes a voltage measuring means for measuring a cell voltage value of the at least one cell, a current measuring means for measuring a cell current value of the at least one cell, and a temperature measuring means for measuring a cell temperature of the at least one cell. The controller includes a memory storage unit, a first secure boot execution unit, a first process execution unit, a second secure boot execution unit, and a second process execution unit. The memory storage unit separately stores a start-up program related to a start-up process of starting up the measuring means, a measurement program related to a measurement process of measuring the cell voltage value, the cell current value, and the cell temperature by the measuring means, and a state calculation program related to a calculation process of calculating a battery state of the battery cell based on at least one of the cell voltage value, the cell current value, and the cell temperature that have been measured by the measurement process. The first secure boot execution unit executes a secure boot for a first program containing at least the start-up program. The first process execution unit executes processes contained in the first program after the secure boot is executed by the first secure boot execution unit. The second secure boot execution unit executes a secure boot for a second program containing at least one of the measurement program and the state calculation program, while the processes executed by the first process execution unit are being executed. The second process execution unit executes processes contained in the second program after the processes executed by the first process execution unit are executed and also the secure boot executed by the second secure boot execution unit is executed.

According to the present disclosure, the battery system sequentially executes the start-up process, the measurement process, and the calculation process at the time of start up, to thereby calculates the battery state of the battery cell. Therefore, a secure boot is executed for the first program, which contains at least the start-up program related to the start-up process to be executed initially, and the processes contained in the first program are executed. Then, in parallel with executing the processes contained in the first program, a secure boot is executed for the second program, which contains at least one of the measurement program and the state calculation program. Thus, the program is divided into the first program and the second program in consideration of the order of the processes that are necessary for calculating the battery state so that the processes contained in the first program and the secure boot for the second program can be executed in parallel with each other. As a result, it is possible to shorten the execution time required for the secure boot.

### BRIEF DESCRIPTION OF THE DRAWINGS

Fig. 1 is a schematic view illustrating a battery system according to a first embodiment.
Fig. 2 is a schematic view illustrating a process when calculating the battery state of a battery cell.
Fig. 3 is a schematic view illustrating a first program and a second program in the first embodiment.
Fig. 4 is a timing chart illustrating the control procedure at the time of starting up the battery system of the first embodiment.
Fig. 5 is a schematic view illustrating a first program and a second program in a modified example of the first embodiment.
Fig. 6 is a schematic view illustrating a first program and a second program in a second embodiment.
Fig. 7 is a block diagram illustrating a controller of a battery system according to the second embodiment.
Fig. 8 is a timing chart illustrating the control procedure at the time of starting up the battery system of the second embodiment.

### DETAILED DESCRIPTION

Hereinbelow, embodiments of the technology according to the present disclosure will be described with reference to the drawings. It should be noted, however, that the embodiments disclosed herein are, of course, not intended to limit the invention. The drawings are schematic illustrations, and do not necessarily reflect any actual product. The features and components that exhibit the same effects are designated by the same reference symbols as appropriate, and the description thereof will not be repeated as appropriate.

### First Embodiment

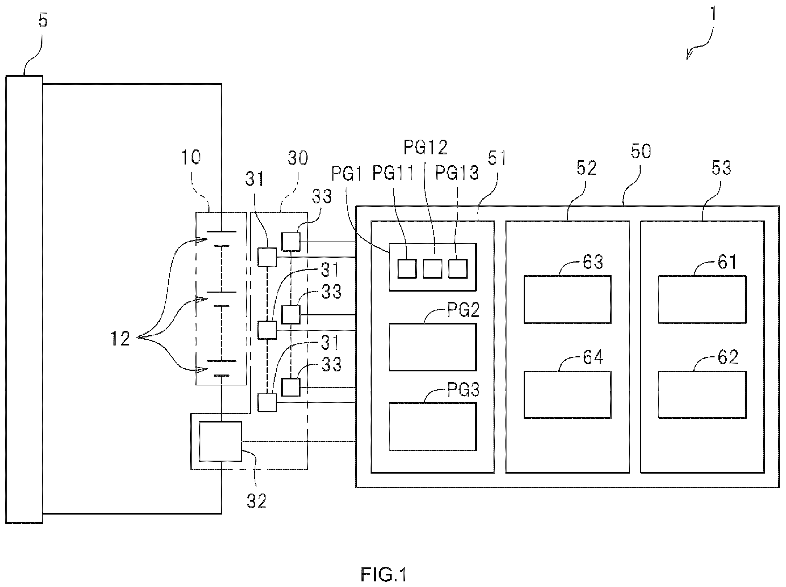

Fig. 1 is a schematic illustrative drawing illustrating a battery system 1 according to a first embodiment. As illustrated in Fig. 1, the battery system 1 includes battery cells 12. The battery cells 12 are ones that are capable of being charged and discharged. For the battery cells 12, it may be possible to use secondary batteries, for example. Secondary batteries are batteries capable of repeated charging and discharging by the migration of charge carriers between a pair of electrodes (for example, positive electrode and negative electrode) through an electrolyte, for example. For the battery cells 12, it may be possible to use lithium-ion secondary batteries, nickel-metal hydride batteries, or the like, for example. In the present embodiment, the battery cells 12 are lithium-ion secondary batteries. The number of battery cells 12 contained in the battery system 1 is not limited to any particular number but may be a predetermined number. In the present embodiment, the battery system 1 includes a plurality of battery cells 12. Herein, the plurality of battery cells 12 constitute a battery pack 10. In the battery pack 10, the plurality of battery cells 12 are connected in series. Herein, the plurality of battery cells 12 are connected in series via a bus bar, not shown. However, it is also possible that the plurality of battery cells 12 may be connected in parallel.

In the battery system 1, the plurality of battery cells 12 are (in other words, the battery pack 10 is) connected to a load 5. From the plurality of battery cells 12, electric power is supplied to the load 5. The load 5 is not particularly limited to any type of load. The load 5 may be, for example, a drive device, such as an electric motor, or an inverter or the like, of a vehicle. The load 5 may be connected to a smoothing capacitor for reducing abrupt changes in electric current. Herein, the battery system 1 is an on-board system that is incorporated in, for example, vehicles such as hybrid electric vehicles, plug-in hybrid electric vehicles, and battery electric vehicles. In this case, the battery pack 10 of the battery system 1 is used as the power source to supply electric power to the electric motors for propelling the vehicles. The battery system 1 is, however, not limited to those for use in vehicles. It should be noted that, in the present embodiment, the number of battery cells 12 contained in the battery system 1 may be determined as appropriate according to the magnitude of the electric power to be supplied to the load 5.

In the present embodiment, the battery system 1 includes a measuring means 30 and a controller 50, as illustrated in Fig. 1. The measuring means 30 measures parameters related to the battery cells 12. Herein, the measuring means 30 measures parameters that are used when calculating the battery state of the battery cells 12. The specific types of parameters to be measured by the measuring means 30 are not particularly limited.

In the present embodiment, the measuring means 30 includes a voltage measuring means 31, a current measuring means 32, and a temperature measuring means 33. The voltage measuring means 31 measures the voltage values of the battery cells 12 (hereinafter also referred to as "cell voltage values"). The specific type of voltage measuring means 31 is not limited to any particular type as long as it is capable of measuring cell voltage values. In the present embodiment, the voltage measuring means 31 is, for example, a voltage measurement IC (Integrated Circuit). The current measuring means 32 measures the current values of the battery cells 12 (hereinafter also referred to as "cell current values"). The specific type of current measuring means 32 is not limited to any particular type as long as it is capable of measuring cell current values. In the present embodiment, the current measuring means 32 is, for example, a current measuring element (in other words, current sensor). The temperature measuring means 33 measures the temperatures of the battery cells 12 (hereinafter also referred to as "cell temperatures"). The specific type of temperature measuring means 33 is not limited to any particular type as long as it is capable of measuring cell temperatures. In the present embodiment, the temperature measuring means 33 is, for example, a temperature measuring element (in other words, temperature sensor).

In the present embodiment, it is possible that the cell voltage values of the plurality of battery cells 12 may be different from each other. For this reason, the voltage measuring means 31 is provided for each of the battery cells 12. Accordingly, the number of the voltage measuring means 31 is the same as the number of the battery cells 12. Likewise, it is possible that the cell temperatures of the plurality of battery cells 12 may be different from each other. For this reason, the temperature measuring means 33 is provided for each of the battery cells 12. Accordingly, the number of the temperature measuring means 33 is the same as the number of the battery cells 12. In the present embodiment, because the plurality of battery cells 12 are connected in series, the cell current values of the plurality of battery cells 12 are the same. For this reason, only one current measuring means 32 is needed for the plurality of battery cells 12 (in other words, for the battery pack 10). The current measuring means 32 measures the current value at any given location so that the measured current value is the cell current value of the plurality of battery cells 12.

The controller 50 performs, for example, control for calculating the battery state of the plurality of battery cells 12. In addition, the controller 50 also performs control related to current flow between the battery cells 12 and the load 5 and control for supplying electric power from the battery cells 12 to the load 5. The configuration of the controller 50 is not limited to any particular configuration. The controller 50 may be, for example, a microcomputer. The controller 50 includes, for example, an I/F, a CPU, a ROM, and a RAM. The controller 50 may be composed of either a single computer or a plurality of computers.

In the present embodiment, the controller 50 includes a memory storage unit 51, a CPU 52, and an HSM 53, as illustrated in Fig. 1. The memory storage unit 51 stores, for example, a battery program for executing a process of calculating the battery state of the battery cells 12. The CPU 52 is a central processing unit. The CPU 52 issues instructions to the measuring means 30, the HSM 53, and so forth. The HSM 53 is a hardware security module, which is dedicated hardware for managing information securely. In the present embodiment, the HSM 53 executes a later-described secure boot.

In the present embodiment, the controller 50 calculates the battery state of the plurality of battery cells 12 contained in the battery pack 10 and judges the degree of deterioration of the battery cells 12 from the battery state. Herein, the battery state of the battery cells 12 is not particularly limited. Examples of the battery state of the battery cells 12 may include SOC, SOH, and SOF, for example. SOC is an acronym for State of Charge, which is an indicator of the state of charge of the battery cells 12. For example, SOC is one that indicates a battery capacity in the case where it is assumed that the fully charged state is 100% and the fully discharged state is 0%. SOH is an acronym for State of Health, which is an indicator of the capacity deterioration level of the battery cells 12, expressed in percentage. SOH may be, for example, the degree of health, or the degree of wellness, of the battery cells 12. SOH is a capacity ratio of the battery cells 12 before and after deterioration. For example, SOH is the rate of capacity at the time of deterioration when the initial battery capacity of the battery cells 12 is assumed to be 100%. SOF is an acronym for State of Function, which is an indicator that represents input-output characteristics, such as the maximum charge-discharge current or electric power, of the battery cells 12.

In the present embodiment, the battery state such as SOC, SOH, and SOF may be calculated using at least one value of the cell voltage value, the cell current value, and the cell temperature of the battery cells 12. Herein, the battery state such as SOC, SOH, and SOF is calculated using all of the cell voltage value, the cell current value, and the cell temperature of the battery cells 12. SOC, SOH, and SOF may be calculated by conventionally known methods.

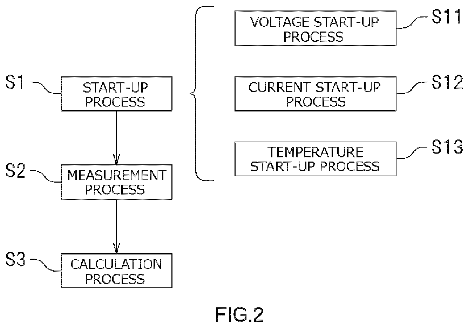

Fig. 2 is a schematic view illustrating a process when calculating the battery state of the battery cells 12. In the present embodiment, the controller 50 may calculate the battery state of the battery cells 12 by executing a plurality of processes sequentially. Herein, in calculating the battery state of the battery cells 12, the controller 50 executes a start-up process S1, a measurement process S2, and a calculation process S3 sequentially upon starting up the battery system 1, as illustrated in Fig. 2. The start-up process S1 is a process of starting the measuring means 30. Herein, the start-up process S1 is a process of starting the measuring means 30, which measures necessary parameters for calculating the battery state. The start-up process S1 involves starting up the voltage measuring means 31, the current measuring means 32, and the temperature measuring means 33 as the measuring means 30. In the present embodiment, the start-up process S1 includes a voltage start-up process S11 of starting up the voltage measuring means 31, a current start-up process S12 of starting up the current measuring means 32, and a temperature start-up process S13 of starting up the temperature measuring means 33. It should be noted that the specific contents of the processing of the start-up process S1 are not particularly limited. In the present embodiment, the start-up process S1 involves executing a process of bringing the measuring means 30 into a state in which it is able to measure parameters. For example, the start-up process S1 involves executing initialization processes for the voltage measuring means 31, the current measuring means 32, and the temperature measuring means 33 so that they are brought into a state such as to be able to measure the cell voltage value, the cell current value, and the cell temperature, respectively.

The measurement process S2 is a process of measuring parameters with the measuring means 30. In the present embodiment, in the measurement process S2, the voltage measuring means 31 measures cell voltage values, the current measuring means 32 measures cell current values, and the temperature measuring means 33 measures cell temperatures. Herein, upon receiving an instruction from the CPU 52, the cell voltage value, the cell current value, and the cell temperature of each of the battery cells 12 are measured. For example, the CPU 52 transmits a measurement signal to the voltage measuring means 31, the current measuring means 32, and the temperature measuring means 33. Upon receiving the measurement signal, the voltage measuring means 31 measures the cell voltage values of the battery cells 12. Upon receiving the measurement signal, the current measuring means 32 measures the cell current values of the battery cells 12. Upon receiving the measurement signal, the temperature measuring means 33 measures the cell temperatures of the battery cells 12. In the measurement process S2, the CPU 52 acquires the cell voltage value, the cell current value, and the cell temperature of each of the battery cells 12.

The calculation process S3 is a process of calculating the battery state of each of the battery cells 12. In the calculation process S3, the battery state of each of the battery cells 12 is calculated based on at least one of the cell voltage value, the cell current value, and the cell temperature that are measured in the measurement process S2. For example, in the calculation process S3, at least one of SOC, SOH, and SOF is calculated as the battery state of each of the battery cells 12, using all of the cell voltage value, the cell current value, and the cell temperature. Herein, all of the SOC, SOH, and SOF of each of the battery cells 12 are calculated at the same timing. In the calculation process S3, for example, at least one of SOC, SOH, and SOF may be calculated by substituting at least one of the cell voltage value, the cell current value, and the cell temperature into a predetermined calculation formula.

In the present embodiment, as illustrated in Fig. 1, a start-up program PG1, a measurement program PG2, and a state calculation program PG3 are stored in advance as battery programs in the memory storage unit 51. The start-up program PG1 is a program related to the start-up process S1 of Fig. 2. When the CPU 52 of the controller 50 executes the start-up program PG1, the start-up process S1 is thereby executed. When the start-up process S1 is executed, the measuring means 30 starts up. In the present embodiment, as illustrated in Fig. 1, the start-up program PG1 includes a voltage start-up program PG11, a current start-up program PG12, and a temperature start-up program PG13. The voltage start-up program PG11 is a program related to the voltage start-up process S11 of Fig. 2. When the voltage start-up program PG11 is executed, the voltage measuring means 31 provided for each of the battery cells 12 is started up. The current start-up program PG12 a program related to the current start-up process S12 of Fig. 2. When the current start-up program PG12 is executed, the current measuring means 32 is started up. The temperature start-up program PG13 is a program related to the temperature start-up process S13 of Fig. 2. When the temperature start-up program PG13 is executed, the temperature measuring means 33 provided for each of the battery cells 12 is started up.

The measurement program PG2 is a program related to the measurement process S2 of Fig. 2. When the CPU 52 executes the measurement program PG2, the measurement process S2 is thereby executed. When the measurement process S2 is executed, the cell voltage value, the cell current value, and the cell temperature of each of the battery cells 12 are measured. The state calculation program PG3 is a program related to the calculation process S3 of Fig. 2. When the CPU 52 executes the state calculation program PG3, the calculation process S3 is thereby executed. When the calculation process S3 is executed, the battery state of each of the battery cells 12 (for example, SOC, SOH, and SOF) is calculated.

In the present embodiment, a secure boot is executed for a program before the program is executed. The secure boot is a security function for the battery system 1. The secure boot is a function that detects tampering with each of the programs stored in the memory storage unit 51 of the controller 50, to ensure the safety (or integrity) of each of the programs. In the present embodiment, the secure boot is executed for the programs stored in the memory storage unit 51. Note that the secure boot may be executed by a conventionally known method. Herein, execution of the secure boot enables a program with which tampering is not detected and safety is ensured to be executed. Herein, the secure boot is executed by the HSM 53 of the controller 50. The secure boot is executed for the start-up program PG1 (more specifically, the voltage start-up program PG11, the current start-up program PG12, and the temperature start-up program PG13), the measurement program PG2, and the state calculation program PG3, which are stored in the memory storage unit 51. It is more desirable that the execution time required for executing the secure boot is shorter. For this reason, the present embodiment shortens the execution time required for executing the secure boot that is executed at the time of starting up the battery system 1.

In the present embodiment, as illustrated in Fig. 1, the start-up program PG1, the measurement program PG2, and the state calculation program PG3 are stored separately in the memory storage unit 51. Herein, the phrase "stored separately" is meant to indicate a state in which each of the programs is continuous. Herein, each of the start-up program PG1, the measurement program PG2, and the state calculation program PG3 is described collectively, and one of the programs is not nested in the middle of another one of the programs. For example, the start-up program PG1, the measurement program PG2, and the state calculation program PG3 are stored independently in one or a plurality of files. That is, the measurement program PG2 or the state calculation program PG3 is not nested in a middle portion of the start-up program PG1. The start-up program PG1 or the state calculation program PG3 is not nested in a middle portion of the measurement program PG2. Also, the start-up program PG1 or the measurement program PG2 is not nested in a middle portion of the state calculation program PG3. For example, when the start-up program PG1, the measurement program PG2, and the state calculation program PG3 are stored in one file, they are stored in the following order: the start-up program PG1, the measurement program PG2, and the state calculation program PG3.

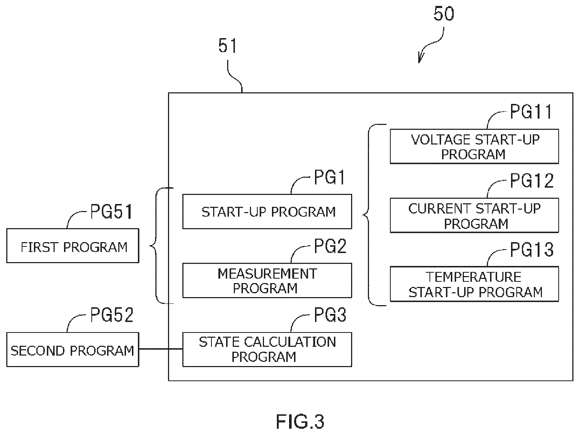

Fig. 3 is a schematic view illustrating a first program PG51 and a second program PG52. In the present embodiment, the battery program stored in the memory storage unit 51 is divided into the first program PG51 and the second program PG52. The first program PG51 includes the start-up program PG1 (more specifically, the voltage start-up program PG11, the current start-up program PG12, and the temperature start-up program PG13) and the measurement program PG2. The second program PG52 includes the state calculation program PG3. The first program PG51 and the second program PG52 are stored separately in the memory storage unit 51.

In the present embodiment, as illustrated in Fig. 1, the controller 50 includes a first secure boot execution unit 61, a second secure boot execution unit 62, a first process execution unit 63, and a second process execution unit 64. Each of the units 61 to 64 of the controller 50 may be implemented by software or may be implemented by hardware. Each of the units 61 to 64 of the controller 50 may be implemented by a single processor or a plurality of processors, or may be implemented by circuitry. Herein, the first secure boot execution unit 61 and the second secure boot execution unit 62 are contained in the HSM 53, and each of them is a function of the HSM 53. The first process execution unit 63 and the second process execution unit 64 are contained in the CPU 52, and each of them is a function of the CPU 52.

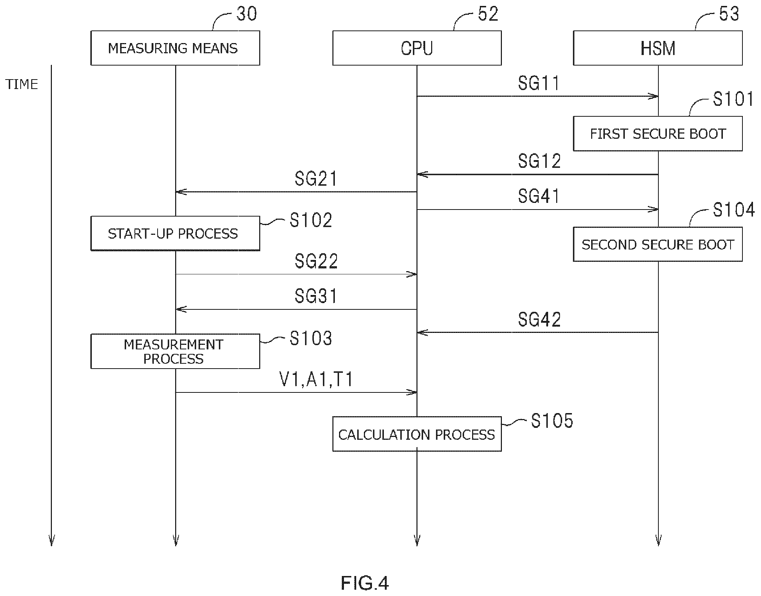

Next, the control procedure at the time of starting up the battery system 1 is described with reference to Fig. 4. In the present embodiment, when starting up the battery system 1, a secure boot is executed for the first program PG51 (specifically, the start-up program PG1 and the measurement program PG2) and the second program PG52 (specifically, the state calculation program PG3) in that order.

First, at step S101 shown in Fig. 4, the first secure boot execution unit 61 of the HSM 53, shown in Fig. 1, executes a secure boot (hereinafter also referred to as a first secure boot) for the first program PG51. Herein, the first secure boot execution unit 61 executes a secure boot for the start-up program PG1 (more specifically, the voltage start-up program PG11, the current start-up program PG12, and the temperature start-up program PG13) and the measurement program PG2, which are contained in the first program PG51. In the present embodiment, the CPU 52 transmits a first secure boot starting signal SG11 to the HSM 53, as illustrated in Fig. 4. When the HSM 53 receives the first secure boot starting signal SG11, the first secure boot execution unit 61 executes the first secure boot for the first program PG51. When the first secure boot is executed and no tampering is detected for the first program PG51, the HSM 53 transmits a first secure boot completion signal SG12 to the CPU 52. By receiving the first secure boot completion signal SG12, the CPU 52 is able to judge that the first secure boot has completed successfully. Herein, the phrase "secure boot has completed successfully" means that the program for which the secure boot has been executed is not tampered with and safety is ensured.

After the first secure boot is executed in this way, step S 102 and step S103 of Fig. 4 are executed sequentially. At step S102 and step S103, the first process execution unit 63 of Fig. 1 executes processes contained in the first program PG51 after the first secure boot is executed. Here, the processes contained in the first program PG51 include the start-up process S1 and the measurement process S2. In the present embodiment, at step S102, the first process execution unit 63 executes the start-up process S1. Herein, the first process execution unit 63 executes the start-up program PG1 to thereby execute the start-up process S1 for the measuring means 30. The first process execution unit 63 executes the voltage start-up program PG11, the current start-up program PG12, and the temperature start-up program PG13 contained in the start-up program PG1 to start up the voltage measuring means 31, the current measuring means 32, and the temperature measuring means 33. Herein, the first process execution unit 63 executes the voltage start-up process S11, the current start-up process S12, and the temperature start-up process 13 as the start-up process S1. In the present embodiment, as illustrated in Fig. 4, after the CPU 52 receives the first secure boot completion signal SG12, the first process execution unit 63 of the CPU 52 transmits a start-up signal SG21 to the voltage measuring means 31, the current measuring means 32, and the temperature measuring means 33 of the measuring means 30. Upon receiving the start-up signal SG21, the measuring means 30 (i.e., the voltage measuring means 31, the current measuring means 32, and the temperature measuring means 33) executes the start-up process S1. For example, as a start up the measuring means 30, a predetermined initialization process is performed. When the start-up process S1 has been executed for the measuring means 30, the measuring means 30 transmits a start-up completion signal SG22 to the CPU 52. By receiving the start-up completion signal SG22, the CPU 52 judges that the start-up process S1 has been executed for the measuring means 30.

Next, at step S103 of Fig. 4, the first process execution unit 63 executes the measurement process S2. Herein, after the CPU 52 has received the start-up completion signal SG22, the first process execution unit 63 executes the measurement program PG2, to thereby allow the measurement process S2 to be executed for the measuring means 30. In the present embodiment, when executing the measurement process S2, the first process execution unit 63 of the CPU 52 transmits a measurement signal SG31 to the voltage measuring means 31, the current measuring means 32, and the temperature measuring means 33 of the measuring means 30, as illustrated in Fig. 4. When receiving the measurement signal SG31, the voltage measuring means 31 measures a cell voltage value V1 of the battery cells 12. Thereafter, the cell voltage value V1 is transmitted from the voltage measuring means 31 to the CPU 52. When receiving the measurement signal SG31, the current measuring means 32 measures a cell current value A1 of the battery cells 12. Thereafter, the cell current value A1 is transmitted from the current measuring means 32 to the CPU 52. When receiving the measurement signal SG31, the temperature measuring means 33 measures a cell temperature T1 of the battery cells 12. The cell temperature T1 is transmitted from the temperature measuring means 33 to the CPU 52. The first process execution unit 63 completes execution of the measurement process S2 by receiving the cell voltage value V1, the cell current value A1, and the cell temperature T1.

In the present embodiment, at step S104, while the processes (the start-up process S1 and the measurement process S2 herein) executed by the first process execution unit 63 are being executed, the second secure boot execution unit 62 shown in Fig. 1 executes a secure boot (hereinafter also referred to as a second secure boot) for the second program PG52. Herein, the second secure boot execution unit 62 executes a secure boot for the state calculation program PG3 as the second program PG52. In the present embodiment, as illustrated in Fig. 4, the CPU 52 transmits a second secure boot starting signal SG41 to the HSM 53. When the HSM 53 receives the second secure boot starting signal SG41, the second secure boot execution unit 62 executes the second secure boot for the second program PG52. When the second secure boot is executed and no tampering is detected for the second program PG52, the HSM 53 transmits a second secure boot completion signal SG42 to the CPU 52. By receiving the second secure boot completion signal SG42, the CPU 52 is able to judge that the second secure boot has completed successfully.

In the present embodiment, at step S104, the second secure boot execution unit 62 is configured to complete the execution of the second secure boot for the second program PG52 before the first process execution unit 63 completes the execution of the processes contained in the first program PG51. Herein, the second secure boot execution unit 62 completes the execution of the second secure boot before the first process execution unit 63 completes the execution of the measurement process S2. More specifically, the second secure boot completion signal SG42 is transmitted from the HSM 53 to the CPU 52 before the cell voltage value V1, the cell current value A1, and the cell temperature T1 that are measured in the measurement process S2 are transmitted to the CPU 52. It should be noted that, in the present embodiment, approximate time for a first execution time of the first secure boot for the first program PG51 and for a second execution time of the second secure boot for the second program PG52 may be calculated in advance according to the processing capability of the controller 50 and the size of the programs. Accordingly, based on the second execution time that has been calculated in advance, the second secure boot execution unit 62 starts the execution of the second secure boot so as to complete the execution of the second secure boot before the first process execution unit 63 completes the execution of the processes contained in the first program PG51.

At step S105 shown in Fig. 4, the second process execution unit 64 shown in Fig. 1 executes processes contained in the second program PG52. Herein, the second process execution unit 64 executes a calculation process S3 that is executed by the state calculation program PG3. In the present embodiment, the calculation process S3 is a process that is executed after the measurement process S2 and the second secure boot for the state calculation program PG3 are executed. Thus, the second process execution unit 64 executes the calculation process S3 after the start-up process S1 and the measurement process S2 are executed by the first process execution unit 63 and also the second secure boot is executed by the second secure boot execution unit 62. The second process execution unit 64 calculates, as the calculation process S3, at least one of the SOC, SOH, and SOF that are the battery states of the battery cells 12, using all of the cell voltage value V1, the cell current value A1, and the cell temperature T1 that have been measured by the measurement process S2. Herein, all the SOC, the SOH, and the SOF of the battery cells 12 are calculated at the same timing.

In the present embodiment, after the calculation process S3 is executed, the battery system 1 shifts to a normal start-up mode. The normal start-up mode is a mode in which the battery system 1 is ready to pass current from the battery pack 10 of the battery system 1 to the load 5. Although not shown in the drawings, the battery system 1 can either allow or stop electric current to pass to the load 5 when in the normal start-up mode, based on an instruction from the ECU of the vehicle in which the battery system 1 is incorporated. When the battery system 1 does not shift to the normal start-up mode, the battery system 1 remains in the state electric current is not passed from the battery pack 10 to the load 5. In this case, the vehicle is unable to travel using an electric motor, which is an example of the load 5.

As described above, in the present embodiment, the battery system 1 includes the battery cells 12, the measuring means 30 and the controller 50, as illustrated in Fig. 1. The measuring means 30 includes the voltage measuring means 31 that measures the cell voltage value V1 of the battery cells 12, the current measuring means 32 that measures the cell current value A1 of the battery cells 12, and the temperature measuring means 33 that measures the cell temperature of the battery cells 12. As illustrated in Fig. 1, the controller 50 includes the memory storage unit 51, the first secure boot execution unit 61, the first process execution unit 63, the second secure boot execution unit 62, and the second process execution unit 64. The memory storage unit 51 separately stores the start-up program PG1, which is related to the start-up process S1 of starting up the measuring means 30, the measurement program PG2, which is related to the measurement process S2 of measuring the cell voltage value V1, the cell current value A1, and the cell temperature T1 by the measuring means 30, and the state calculation program PG3, which is related to the calculation process S3 of calculating the battery state of the battery cells 12 based on at least one of the cell voltage value V1, the cell current value A1, and the cell temperature T1 that have been measured by the measurement process S2. As indicated by step S101 of Fig. 4, the first secure boot execution unit 61 executes the first secure boot for the first program PG51 (see Fig. 3) containing at least the start-up program PG1. After the first secure boot is executed by the first secure boot execution unit 61, the first process execution unit 63 executes the processes contained in the first program PG51 (the start-up process S1 and the measurement process S2 herein) at step S102 and step S103 shown in Fig. 4. While the first process execution unit 63 is executing the processes, the second secure boot execution unit 62 executes the second secure boot for the second program PG52, which contains at least one of the measurement program PG2 and the state calculation program PG3 (the state calculation program PG3 herein). After the first process execution unit 63 executes the processes and also the second secure boot execution unit 62 executes the second secure boot, the second process execution unit 64 executes the processes contained in the second program PG52 (the calculation process S3 herein) at step S105 of Fig. 4.

In the present embodiment, at the time of starting up the battery system 1, the battery state of each of the battery cells 12 is calculated by sequentially executing the start-up process S1, the measurement process S2, and the calculation process S3, as illustrated in Fig. 2. Therefore, the first secure boot is executed for the first program PG51, which contains at least the start-up program PG1 related to the start-up process S1 to be executed initially, and the processes contained in the first program PG51 are executed. Then, in parallel with the execution of the processes contained in the first program PG51, the second secure boot is executed for the second program PG52, which contains the state calculation program PG3. Thus, the battery program is divided into the first program PG51 and the second program PG52 in consideration of the order of the processes that are necessary for calculating the battery state, so that the processes contained in the first program PG51 and the second secure boot for the second program PG52 can be executed in parallel with each other. As a result, it is possible to shorten the execution time required for the secure boot.

In the present embodiment, as illustrated in Fig. 3, the first program PG51 includes the start-up program PG1 and the measurement program PG2. The second program PG52 includes the state calculation program PG3. For example, the state calculation program PG3 may result in a greater capacity and a longer processing time when executed than the total program of the start-up program PG1 and the measurement program PG2 together. For this reason, the secure boot can be executed more efficiently by altering the timing when the secure boot is to be executed for the start-up program PG1, the measurement program PG2, and the state calculation program PG3.

In the present embodiment, it is possible that the measurement program PG2 may be contained in the second program PG52. In other words, the first program PG51 may include the start-up program PG1, and the second program PG52 may include the measurement program PG2 and the state calculation program PG3. When this is the case, the first secure boot execution unit 61 executes the first secure boot for the start-up program PG1. The first process execution unit 63 executes the start-up process S1. The second secure boot execution unit 62 executes the second secure boot for the measurement program PG2 and the state calculation program PG3. The second process execution unit 64 sequentially executes the measurement process S2 and the calculation process S3.

In the present embodiment, the second secure boot execution unit 62 is configured to complete the execution of the second secure boot for the second program PG52 before the first process execution unit 63 completes the execution of the processes contained in the first program PG51. This enables the execution of the second secure boot for the second program PG52 to have already been completed when completing the start-up process S1 and the measurement process S2, which are contained in the first program PG51. Therefore, it is possible to execute the calculation process S3 at the time when the measurement process S2 is completed. As a result, the process of calculating the battery state of the battery cells 12 can be executed efficiently.

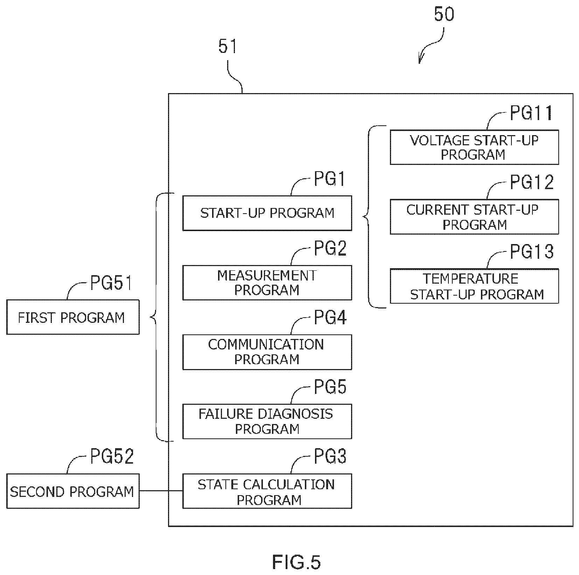

Fig. 5 is a schematic view illustrating the first program PG1 and the second program PG52 in a modified example of the first embodiment. In the present embodiment, as illustrated in Fig. 5, the first program PG51 may include other programs than the start-up program PG1 and the measurement program PG2. The memory storage unit 51 may store a communication program PG4 and a failure diagnosis program PG5. The communication program PG4 is a program related to a communication process that enables the controller 50 and an outside of the battery system 1 to communicate with each other. The outside of the battery system 1 refers to, for example, an ECU of the vehicle in which the battery system 1 is incorporated. For example, the controller 50 of the battery system 1 and the ECU are communicably connected to each other by a CAN communication controller (not shown). The communication process executed by the communication program PG4 refers to a process of initializing the CAN communication controller. The communication process is, for example, a process that is executed after the start-up process S1. When the CPU 52 executes the communication program PG4, the communication process is thereby executed. This causes the CAN communication controller to be initialized and establishes CAN communications between the controller 50 and the ECU.

The failure diagnosis program PG5 is a program related to a failure diagnosis process of diagnosing a failure in the measuring means 30 (more specifically, the voltage measuring means 31, the current measuring means 32, and the temperature measuring means 33). When the CPU 52 executes the failure diagnosis program PG5, the failure diagnosis process for the measuring means 30 is thereby executed. It should be noted that the failure diagnosis process is not limited to any particular specific process as long as it is a process that is able to diagnose (in other words, detect) a failure in the measuring means 30, and it may employ a conventionally known process.

In the present embodiment, as illustrated in Fig. 5, the first program PG51 may include the communication program PG4 and the failure diagnosis program PG5, in addition to the start-up program PG1 and the measurement program PG2. When this is the case, the first secure boot execution unit 61 of Fig. 1 executes a first secure boot for the communication program PG4 and the failure diagnosis program PG5, in addition to the start-up program PG1 and the measurement program PG2. The first process execution unit 63 executes the communication program PG4 to thereby execute the communication process and also executes the failure diagnosis program PG5 to thereby execute the failure diagnosis process for the measuring means 30.

The communication process and the failure diagnosis process are the processes that are executed collectively together with the start-up process S1 and the like, for example, at the time of starting up the battery system 1. Accordingly, by executing the first secure boot for the communication program PG4 and the failure diagnosis program PG5 at the same timing as that for the start-up program PG1, it is possible to execute the secure boot efficiently and also execute the communication process and the failure diagnosis process.

### Second Embodiment

Next, a battery system 1A according to a second embodiment will be described. In the present embodiment, the first program is further subdivided to execute a secure boot.

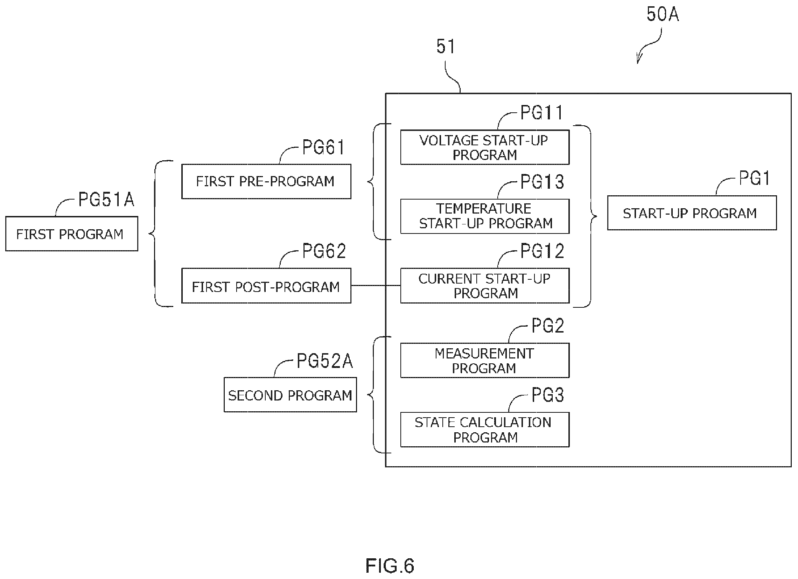

Fig. 6 is a schematic view illustrating a first program PG51A and a second program PG52A in the second embodiment. As illustrated in Fig. 6, the first program PG51A includes a first pre-program PG61 and a first post-program PG62. The first pre-program PG61 includes a voltage start-up program PG11 related to a voltage start-up process S11 of starting up a plurality of voltage measuring means 31, and a temperature start-up program PG13 related to a temperature start-up process S13 of starting up a plurality of temperature measuring means 33. The first post-program PG62 includes a current start-up program PG12 related to a current start-up process S12 of starting up one current measuring means 32. The second program PG52A includes a measurement program PG2 related to a measurement process S2, and a state calculation program PG3 related to a calculation process S3.

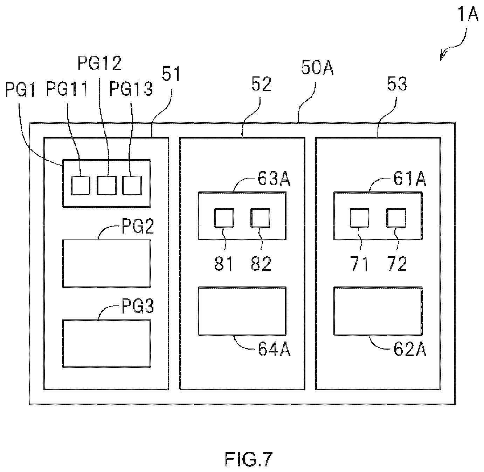

Fig. 7 is a block diagram illustrating a controller 50A according to the second embodiment. As illustrated in Fig. 7, the battery system 1A includes a controller 50A. The controller 50A includes a first secure boot execution unit 61A, a second secure boot execution unit 62A, a first process execution unit 63A, and a second process execution unit 64A.

The first secure boot execution unit 61A includes a first pre-secure boot execution unit 71 and a first post-secure boot execution unit 72. The first pre-secure boot execution unit 71 executes a secure boot (hereinafter also referred to as a first pre-secure boot) for the first pre-program PG61 (the voltage start-up program PG11 and the temperature start-up program PG13 herein). The first post-secure boot execution unit 72 executes a secure boot (hereinafter also referred to as a first post-secure boot) for the first post-program PG62 (the current start-up program PG12 herein). The second secure boot execution unit 62A executes a second secure boot for the second program PG52A (the measurement program PG2 and the state calculation program PG3 herein).

As illustrated in Fig. 7, the first process execution unit 63A includes a first pre-process execution unit 81 and a first post-process execution unit 82. After the first pre-secure boot execution unit 71 executes the secure boot, the first pre-process execution unit 81 executes the processes contained in the first pre-program PG61 (the voltage start-up process S11 and the temperature start-up process S13 herein). After the first post-secure boot execution unit 72 executes the secure boot, the first post-process execution unit 82 executes the processes contained in the first post-program PG62 (the current start-up process S12 herein). After the second secure boot execution unit 62A executes the secure boot, the second process execution unit 64A executes the processes contained in the second program PG52A (the measurement process S2 and the calculation process S3 herein).

In the present embodiment, the first post-secure boot execution unit 72 executes the first post-secure boot while the first pre-process execution unit 81 is executing the processes (the voltage start-up process S11 and the temperature start-up process S13 herein). The second secure boot execution unit 62A executes the second secure boot for the second program PG52A while the first post-process execution unit 82 is executing processes (the current start-up process S12 herein) or after the current start-up process S12 has been executed.

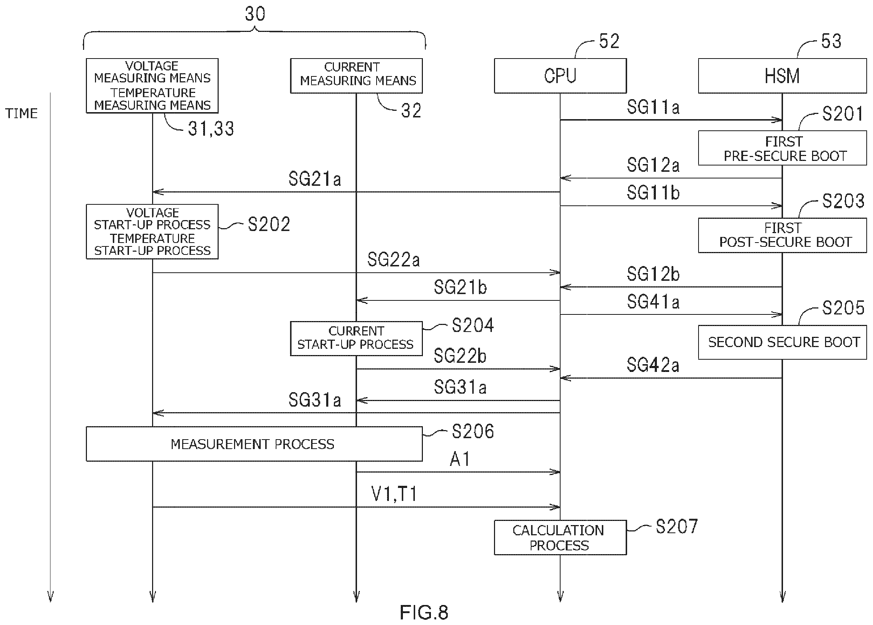

Next, the control procedure at the time of starting up the battery system 1A according to the present embodiment is described with reference to Fig. 8. In the present embodiment, when starting up the battery system 1A, a secure boot is executed for the first pre-program PG61, the first post-program PG62, and the second program PG52 in that order.

First, at step S201 shown in Fig. 8, the first pre-secure boot execution unit 71 of the HSM 53, shown in Fig. 7, executes the first pre-secure boot for the first pre-program PG61. Herein, for example, the CPU 52 transmits a first pre-secure boot starting signal SG11a to the HSM 53. When the HSM 53 receives the first pre-secure boot starting signal SG11a, the first pre-secure boot execution unit 71 executes the first pre-secure boot. When the execution of the first pre-secure boot is completed and no tampering is detected for the first pre-program PG61, the HSM 53 transmits a first pre-secure boot completion signal SG12a to the CPU 52.

Next, at step S202 shown in Fig. 8, the first pre-process execution unit 81 shown in Fig. 7 executes the first pre-program PG61 to execute the processes contained in the first pre-program PG61 (the voltage start-up process S11 and the temperature start-up process S13 herein). Herein, the CPU 52 transmits a first start-up signal SG21a to the voltage measuring means 31 and the temperature measuring means 33. Upon receiving the first start-up signal SG21a, the voltage measuring means 31 executes the voltage start-up process S11. Upon receiving the first start-up signal SG21a, the temperature measuring means 33 executes the temperature start-up process S13. After having been started up, the voltage measuring means 31 and the temperature measuring means 33 transmit a first start-up completion signal SG22a to the CPU 52.

At step S203 shown in Fig. 8, while the first pre-process execution unit 81 is executing the processes (the voltage start-up process S11 and the temperature start-up process S13 herein), the first post-secure boot execution unit 72 shown in Fig. 7 executes the first post-secure boot for the first post-program PG62. Herein, for example, the CPU 52 transmits a first post-secure boot starting signal SG11b to the HSM 53. When the HSM 53 receives the first post-secure boot starting signal SG11b, the first post-secure boot execution unit 72 executes the first post-secure boot. When the execution of the first post-secure boot is completed and no tampering is detected for the first post-program PG62, the HSM 53 transmits a first post-secure boot completion signal SG12b to the CPU 52.

Next, at step S204 shown in Fig. 8, the first post-process execution unit 82 shown in Fig. 7 executes the first post-program PG62 to execute the processes contained in the first post-program PG62 (the current start-up process S12 herein). Herein, the CPU 52 transmits a second start-up signal SG21b to the current measuring means 32. Upon receiving the second start-up signal SG21b, the current measuring means 32 executes the current start-up process S12. After having been started up, the current measuring means 32 transmits a second start-up completion signal SG22b to the CPU 52.

In the present embodiment, at step S205 shown in Fig. 8, while the first post-process execution unit 82 is executing the processes (the current start-up process S12 herein), the second secure boot execution unit 62A shown in Fig. 7 executes the second secure boot for the second program PG52A. Herein, for example, the CPU 52 transmits a second secure boot starting signal SG41a to the HSM 53. When the HSM 53 receives the second secure boot starting signal SG41a, the second secure boot execution unit 62A executes the second secure boot. When the execution of the second secure boot is completed and no tampering is detected for the second program PG52A, the HSM 53 transmits a second secure boot completion signal SG42a to the CPU 52.

Thus, after the second secure boot is executed, step S206 and step S207 shown in Fig. 8 are executed. Herein, after the second secure boot is executed, the second process execution unit 64A shown in Fig. 7 executes the processes contained in the second program PG52A. Herein, at step S206, the second process execution unit 64A executes the measurement process S2. After the CPU 52 receives the second secure boot completion signal SG42a, the second process execution unit 64A executes the measurement program PG2, to thereby allow the measurement process S2 to be executed for the measuring means 30. Herein, the second process execution unit 64A transmits a measurement signal SG31a to the voltage measuring means 31, the current measuring means 32, and the temperature measuring means 33 of the measuring means 30. When receiving the measurement signal SG31a, the voltage measuring means 31 measures a cell voltage value V1 of the battery cells 12. Thereafter, the cell voltage value V1 is transmitted from the voltage measuring means 31 to the CPU 52. When receiving the measurement signal SG31a, the current measuring means 32 measures a cell current value A1 of the battery cells 12. Thereafter, the cell current value A1 is transmitted from the current measuring means 32 to the CPU 52. When receiving the measurement signal SG31a, the temperature measuring means 33 measures a cell temperature T1 of the battery cells 12. Thereafter, the cell temperature T1 is transmitted from the temperature measuring means 33 to the CPU 52. The second process execution unit 64A completes execution of the measurement process S2 by receiving the cell voltage value V1, the cell current value A1, and the cell temperature T1.

At step S207 shown in Fig. 8, the second process execution unit 64 shown in Fig. 7 executes the state calculation program PG3 to execute the calculation process S3. In the present embodiment, the second process execution unit 64A executes the calculation process S3 after the measurement process S2 is executed and also the second secure boot is executed by the second secure boot execution unit 62A. The second process execution unit 64A calculates, as the calculation process S3, at least one of the SOC, SOH, and SOF that are the battery states of the battery cells 12, using all of the cell voltage value V1, the cell current value A1, and the cell temperature T1 that have been measured by the measurement process S2. Herein, all of the SOC, SOH, and SOF of the battery cells 12 are calculated at the same timing.

In the present embodiment, both the voltage measuring means 31 and the temperature measuring means 33 are provided for each of the battery cells 12. One current measuring means 32 is provided for a plurality of battery cells 12. This allows the current start-up program PG12 to have a smaller size than the voltage start-up program PG11 and the temperature start-up program PG13, reducing the execution time required for the secure boot. In the present embodiment, a secure boot is executed first for the voltage start-up program PG11 and the temperature start-up program PG13, and thereafter, a secure boot is executed for the current start-up program PG12. This allows the timing for starting the voltage start-up process S11 and the temperature start-up process S13 to be made earlier corresponding to the amount of time the secure boot for the current start-up program PG12 is executed later. This makes it possible to shorten the time required for starting up the battery system 1A.

In the present embodiment, it is also possible that the secure boot for the voltage start-up program PG11 and the secure boot for the temperature start-up program PG13 may be executed separately. For example, the voltage start-up process S11 may be executed after the secure boot for the voltage start-up program PG11 is executed. The secure boot for the temperature start-up program PG13 may be executed while the voltage start-up process S11 is being executed. The temperature start-up process S13 may be executed after the secure boot for the temperature start-up program PG13 is executed. In this case, the secure boot for the current start-up program PG12 may be executed while the temperature start-up process S13 is being executed.

As has been described above, the present description contains the disclosure as set forth in the following items.
Item 1:
   A battery system including:
   at least one battery cell;
   a measuring means including a voltage measuring means for measuring a cell voltage value of the at least one cell, a current measuring means for measuring a cell current value of the at least one cell, and a temperature measuring means for measuring a cell temperature of the at least one cell; and
   a controller, wherein:
      the controller includes:
      a memory storage unit separately storing a start-up program related to a start-up process of starting up the measuring means, a measurement program related to a measurement process of measuring the cell voltage value, the cell current value, and the cell temperature by the measuring means, and a state calculation program related to a calculation process of calculating a battery state of the at least one battery cell based on at least one of the cell voltage value, the cell current value, and the cell temperature that are measured by the measurement process;
      a first secure boot execution unit executing a secure boot for a first program containing at least the start-up program;
      a first process execution unit executing a process contained in the first program after the secure boot is executed by the first secure boot execution unit;
      a second secure boot execution unit executing a secure boot for a second program containing at least one of the measurement program and the state calculation program while the process executed by the first process execution unit is being executed; and
      a second process execution unit executing a process contained in the second program after the process executed by the first process execution unit is executed and the secure boot executed by the second secure boot execution unit is executed.
Item 2:
   The battery system according to item 1, wherein:
   the first program includes the measurement program; and
   the second program includes the state calculation program.
Item 3:
   The battery system according to item 1 or 2, wherein the second secure boot execution unit is configured to complete executing the secure boot for the second program before the first process execution unit completes executing the process contained in the first program.
Item 4:
   The battery system according to item 1, wherein:
   the start-up program includes:
      a voltage start-up program related to a voltage start-up process of starting up the voltage measuring means;
      a current start-up program related to a current start-up process of starting up the current measuring means; and
      a temperature start-up program related to a temperature start-up process of starting up the temperature measuring means;
   the first program includes:
      a first pre-program including the voltage start-up program and the temperature start-up program; and
      a first post-program including the current start-up program;
   the second program includes the measurement program and the state calculation program;
   the first secure boot execution unit includes:
      a first pre-secure boot execution unit executing a secure boot for the first pre-program; and
      a first post-secure boot execution unit executing a secure boot for the first post-program;
   the first process execution unit includes:
      a first pre-process execution unit executing a process contained in the first pre-program after the secure boot is executed by the first pre-secure boot execution unit; and
      a first post-process execution unit executing a process contained in the first post-program after the secure boot is executed by the first post-secure boot execution unit; and
   the first post-secure boot execution unit executes a secure boot while the first pre-process execution unit is executing the process; and
   the second secure boot execution unit executes a secure boot while the first post-process execution unit is executing the process.
Item 5:
   The battery system according to any one of items 1 to 4, wherein:
   the at least one battery cell includes a plurality of battery cells connected in series;
   the voltage measuring means includes a plurality of voltage measuring means, each provided respectively for each of the plurality of battery cells;
   the temperature measuring means includes a plurality of temperature measuring means, each provided respectively for each of the plurality of battery cells; and
   the current measuring means is a single current measuring means provided for all the plurality of battery cells.
Item 6:
   The battery system according to any one of items 1 to 5, wherein:
   the memory storage unit stores a communication program related to a communication process of causing the controller to communicate with an external device; and
   the first program includes the communication program.
Item 7:
   The battery system according to any one of items 1 to 6, wherein:
   the memory storage unit stores a failure diagnosis program related to a failure diagnosis process of diagnosing a failure in the measuring means; and
   the first program includes the failure diagnosis program.

## Claims

1. A battery system (1, 1A) comprising:
at least one battery cell (12);
a measuring means (30) including a voltage measuring means (31) for measuring a cell voltage value of the at least one cell (12), a current measuring means (32) for measuring a cell current value of the at least one cell (12), and a temperature measuring means (33) for measuring a cell temperature of the at least one cell (12); and
a controller (50, 50A), wherein:
the controller (50, 50A) includes:
a memory storage unit (51) separately storing a start-up program (PG1) related to a start-up process (S1) of starting up the measuring means (30), a measurement program (PG2) related to a measurement process (S2) of measuring the cell voltage value, the cell current value, and the cell temperature by the measuring means (30), and a state calculation program (PG3) related to a calculation process (S3) of calculating a battery state of the at least one battery cell (12) based on at least one of the cell voltage value, the cell current value, and the cell temperature that are measured by the measurement process (S2);
a first secure boot execution unit (61, 61A) executing a secure boot for a first program (PG51, PG51A) containing at least the start-up program (PG1);
a first process execution unit (63, 63A) executing a process contained in the first program (PG51, PG51A) after the secure boot is executed by the first secure boot execution unit (61,61A);
a second secure boot execution unit (62, 62A) executing a secure boot for a second program (PG52, PG52A) containing at least one of the measurement program (PG2) and the state calculation program (PG3) while the process executed by the first process execution unit (63, 63A) is being executed; and
a second process execution unit (64, 64A) executing a process contained in the second program (PG52, PG52A) after the process executed by the first process execution unit (63, 63A) is executed and the secure boot executed by the second secure boot execution unit (62, 62A) is executed.

2. The battery system (1) according to claim 1, wherein:
the first program (PG51) includes the measurement program (PG2); and
the second program (PG52) includes the state calculation program (PG3).

3. The battery system (1) according to claim 1 or 2, wherein the second secure boot execution unit (62) is configured to complete executing the secure boot for the second program (PG52) before the first process execution unit (63) completes executing the process contained in the first program (PG51).

4. The battery system (1A) according to claim 1, wherein:
the start-up program (PG1) includes:
a voltage start-up program (PG11) related to a voltage start-up process (S11) of starting up the voltage measuring means (31);
a current start-up program (PG12) related to a current start-up process (S12) of starting up the current measuring means (32); and
a temperature start-up program (PG13) related to a temperature start-up process (S13) of starting up the temperature measuring means (33);
the first program (PG51A) includes:
a first pre-program (PG61) including the voltage start-up program (PG11) and the temperature start-up program (PG13); and
a first post-program (PG62) including the current start-up program (PG12);
the second program (PG52A) includes the measurement program (PG2) and the state calculation program (PG3);
the first secure boot execution unit (61A) includes:
a first pre-secure boot execution unit (71) executing a secure boot for the first pre-program (PG61); and
a first post-secure boot execution unit (72) executing a secure boot for the first post-program (PG62);
the first process execution unit (63A) includes:
a first pre-process execution unit (81) executing a process contained in the first pre-program (PG61) after the secure boot is executed by the first pre-secure boot execution unit (71); and
a first post-process execution unit (82) executing a process contained in the first post-program (PG62) after the secure boot is executed by the first post-secure boot execution unit (72); and
the first post-secure boot execution unit (72) executes a secure boot while the first pre-process execution unit (81) is executing the process; and
the second secure boot execution unit (62A) executes a secure boot while the first post-process execution unit (82) is executing the process.

5. The battery system (1, 1A) according to any one of claims 1 to 4, wherein:
the at least one battery cell (12) includes a plurality of battery cells (12) connected in series;
the voltage measuring means (31) includes a plurality of voltage measuring means (31), each provided respectively for each of the plurality of battery cells (12);
the temperature measuring means (33) includes a plurality of temperature measuring means (33), each provided respectively for each of the plurality of battery cells (12); and
the current measuring means (32) is a single current measuring means (32) provided for all the plurality of battery cells (12).

6. The battery system (1) according to any one of claims 1 to 5, wherein:
the memory storage unit (51) stores a communication program (PG4) related to a communication process of causing the controller (50) to communicate with an external device; and
the first program (PG51) includes the communication program (PG4).

7. The battery system (1) according to any one of claims 1 to 6, wherein:
the memory storage unit (51) stores a failure diagnosis program (PG5) related to a failure diagnosis process of diagnosing a failure in the measuring means (30); and
the first program (PG51) includes the failure diagnosis program (PG5).
